# EUROPÄISCHE PATENTANMELDUNG

(11) **EP 3 451 507 A1**
(43) Veröffentlichungstag der Anmeldung: **06.03.2019**
(21) Anmeldenummer: 17188810.0
(22) Anmeldetag: 31.08.2017
(51) Int. Cl.: H02K 5/132, H02K 7/14, H02K 3/18, H02K 16/00, B63H 5/125

(54) **ELEKTRISCHE ROTIERENDE MASCHINE FÜR EINEN GONDELANTRIEB**

(71) Anmelder: Siemens Aktiengesellschaft, 80333 München (DE)
(72) Erfinder: Meyer, Christian, 13591 Berlin (DE)

(57) **Zusammenfassung**

Die Erfindung betrifft eine elektrische rotierende Maschine (4), insbesondere Synchronmaschine, für einen Gondelantrieb (2) mit einem Stator (14) und einem Gehäuse (6). Um bei einem modularen Aufbau eine, im Vergleich zum Stand der Technik, geringere axiale Länge der elektrischen rotierenden Maschine (4) zu erzielen, wird vorgeschlagen, dass der Stator (14) mindestens zwei Sub-Statoren (14a, 14b) umfasst, welche jeweils mit dem Gehäuse (6) verbunden sind und eine separate Statorwicklung (24) aufweisen, wobei zumindest eine Statorwicklung (24) eines Sub-Stators (14a, 14b) eine Zahnspule aufweist.

## Beschreibung

Die Erfindung betrifft eine elektrische rotierende Maschine, insbesondere Synchronmaschine, für einen Gondelantrieb mit einem Stator und einem Gehäuse.

Darüber hinaus betrifft die Erfindung einen Gondelantrieb mit mindestens einer derartigen elektrischen rotierenden Maschine.

Die Erfindung betrifft ferner ein Wasserfahrzeug, insbesondere ein Schiff, mit mindestens einem derartigen Gondelantrieb.

Überdies betrifft die Erfindung eine Steuervorrichtung für mindestens eine derartige elektrische rotierende Maschine.

Eine derartige elektrische rotierende Maschine, insbesondere ein Motor oder Generator, kommt bevorzugt in einem Propellergondelantrieb, im Folgenden auch POD-Antrieb oder Gondelantrieb genannt, vor, weist bevorzugt eine Leistung von mindestens 1 Megawatt auf und ist beispielweise als permanenterregte Synchronmaschine ausgeführt.

Die elektrische rotierende Maschine eines Gondelantriebs ist vorzugsweise mit einem strömungsgünstigen Gehäuse, der Gondel, verkleidet und, beispielsweise an einem Schiff montiert, bevorzugt um 360 Grad um eine Hochachse drehbar. Derartige Gondelantriebe sollen in festen Standardgrößen, beispielsweise im Bereich von 1 bis 25 Megawatt, modular hergestellt werden. Hierzu werden der Stator und der Rotor in einzelne Sub-Module aufgeteilt, welche auf einer Welle in Axialrichtung aneinandergereiht werden. Die in der genannten Leistungsklasse üblichen verteilten Wicklungen weisen eine große Wickelkopfausladung auf, welche, insbesondere bei einer Aneinanderreihung von mehreren Stator-Modulen, zu einer sehr langen Gondel führt. Zu lange Gondeln sind aus hydrodynamischen und geometrischen Gründen nicht akzeptabel. Insbesondere darf ein Gondelantrieb beim Wenden nicht über eine Schiffsbreite hinausragen.

Die Offenlegungsschrift EP 0 909 002 A2 beschreibt eine modulare elektrische rotierende Maschine, die einen oder mehrere Submotoren umfasst, wobei jeder der Submotoren einen Stator, der in eine Vielzahl von magnetischen Statoreinheiten aufgeteilt ist, einen Rotor und ein Gehäuse umfasst.

Die Patentschrift US 1,960,484 A beschreibt eine Ölpumpenanordnung, welche mehrere Motoreinheiten aufweist, die in einem Schacht unterhalb der Pumpe angeordnet sind.

Der Erfindung liegt die Aufgabe zugrunde, eine elektrische rotierende Maschine bereitzustellen, welche bei einem modularen Aufbau eine, im Vergleich zum Stand der Technik, geringere axiale Länge aufweist.

Diese Aufgabe wird erfindungsgemäß durch eine elektrische rotierende Maschine, insbesondere Synchronmaschine, für einen Gondelantrieb mit einem Stator und einem Gehäuse gelöst, wobei der Stator mindestens zwei Sub-Statoren umfasst, welche jeweils mit dem Gehäuse verbunden sind und eine separate Statorwicklung aufweisen, wobei zumindest eine Statorwicklung eines Sub-Stators eine Zahnspule aufweist.

Darüber hinaus wird die Aufgabe erfindungsgemäß durch einen Gondelantrieb mit mindestens einer derartigen elektrischen rotierenden Maschine gelöst.

Ferner wird die Aufgabe erfindungsgemäß durch ein Wasserfahrzeug, insbesondere ein Schiff, mit mindestens einem derartigen Gondelantrieb gelöst.

Überdies wird die Aufgabe erfindungsgemäß durch eine Steuervorrichtung für mindestens eine derartige elektrische rotierende Maschine gelöst.

Die in Bezug auf die elektrische rotierende Maschine nachstehend angeführten Vorteile und bevorzugten Ausgestaltungen lassen sich sinngemäß auf den Gondelantrieb, das Wasserfahrzeug und die Steuervorrichtung übertragen.

Der Erfindung liegt die Überlegung zugrunde, dass ein modular aufgebauter POD-Antrieb einfach und kostengünstig in festen Standardgrößen für unterschiedliche Leistungen herstellbar ist. Der modulare Aufbau wird mit Hilfe von mindestens zwei Sub-Statoren realisiert, welche beispielsweise in Axialrichtung hintereinander um einen Rotor herum angeordnet und separat mit einem den POD-Antrieb umgebendem Gehäuse verbunden werden. Durch die Verbindung mit dem insbesondere metallischen Gehäuse, welches beispielsweise aus Stahl oder Bronze hergestellt wird, ist der POD-Antrieb über das umgebende Wasser kühlbar. Die Sub-Statoren weisen jeweils eine eigene Statorwicklung mit Statorspulen, welche insbesondere aus Kupfer hergestellt werden, auf, wobei die Statorwicklung an den axialen Enden eines Statorblechpakets Wickelköpfe ausbildet. Insbesondere bei der Verwendung von verteilten Wicklungen wird eine minimale axiale Länge der elektrischen rotierenden Maschine durch eine Wickelkopfausladung limitiert. Für zumindest eine Statorwicklung zumindest eines der in Axialrichtung aneinandergereihten Sub-Statoren werden Zahnspulen verwendet, welche eine geringe Wickelkopfausladung aufweisen. Durch die geringere Wickelkopfausladung wird, insbesondere bei einer Aneinanderreihung von mehreren Sub-Statoren, eine optimierte axiale Länge des gesamten Stators und damit der gesamten elektrischen rotierenden Maschine erzielt. Ferner wird, insbesondere durch die geringere Wickelkopfausladung der Zahnspulen, ein geringer Abstand zwischen Lagern erzielt, was sich positiv auf eine Rotordynamik auswirkt. Ein möglicherweise schlechterer Wirkungsgrad der Zahnspulen wird durch die geringere Wickelkopfausladung kompensiert. Darüber hinaus sind Zahnspulen leichter zu fertigen als verteilte Wicklungen und eine an einem Drehmoment beteiligte Kupfermenge ist prozentual wesentlich höher.

In einer bevorzugten Ausführungsform umfasst der Stator zwei äußere Sub-Statoren und mindestens einen inneren Sub-Stator. Durch einen modularen Aufbau eines Gondelantriebs mit drei Sub-Statoren ist, insbesondere bei einer Variation der axialen Länge der einzelnen Sub-Statoren, eine Vielzahl von Leistungen realisierbar.

In einer weiteren vorteilhaften Ausführungsform ist eine Stromzuführung mindestens eines inneren Sub-Stators mit mindestens einer Stromzuführung eines äußeren Sub-Stators zumindest teilweise in einen gemeinsamen Kanal verlaufend angeordnet. Um die axiale Länge der elektrischen rotierenden Maschine zu verringern und durch eine möglichst große Kontaktfläche des Gehäuses mit dem umgebenden Wasser eine effiziente Kühlung zu erreichen, wird bei der Verwendung von mindestens drei Sub-Statoren die Stromzuführung des mindestens einen inneren Sub-Stators gemeinsam mit den Stromzuführungen der äußeren Sub-Statoren über das Gehäuse durch den Schaft geführt. Eine zusätzliche Verbindungsstelle, insbesondere ein zusätzlicher Kanal, zwischen Gehäuse und Schaft würde zu einer Vergrößerung der axialen Länge der elektrischen rotierenden Maschine führen und die Kontaktfläche des Gehäuses mit dem umgebenden Wasser verringern. Bei der Verwendung eines gemeinsamen Kanals zur Stromzuführung erfolgt die Kühlung über die Oberfläche des Gehäuses optimal effizient.

Besonders vorteilhaft ist eine Stromzuführung mindestens eines inneren Sub-Stators zumindest teilweise in Axialrichtung durch das Gehäuse und/oder durch ein Statorblechpaket eines äußeren Sub-Stators verlaufend angeordnet. Insbesondere um die Stromzuführung des mindestens einen inneren Sub-Stators gemeinsam mit einer Stromzuführung eines äußeren Sub-Stators über das Gehäuse durch den Schaft zu führen, wird der Stromanschluss des mindestens einen inneren Sub-Stators, im Wesentlichen in Axialrichtung, an den äußeren Sub-Statoren vorbei geführt. Verläuft die Stromzuführung des inneren Sub-Stators in Axialrichtung durch das Gehäuse und/oder durch ein Statorblechpaket eines äußeren Sub-Stators, sind keine baulichen Veränderungen außerhalb des Gehäuses erforderlich.

In einer bevorzugten Ausgestaltung weist die elektrische rotierende Maschine einen Rotor mit Sub-Rotoren auf, welche jeweils drehfest mit einer Welle verbunden sind, wobei jedem Sub-Stator ein Sub-Rotor zugeordnet ist. Durch die Verwendung von separaten und zu den Sub-Statoren korrespondierenden Sub-Rotoren wird Material eingespart.

Besonders vorteilhaft ist die Welle als eine durchgehende Welle ausgeführt. Eine durchgehende Welle ist nicht aus einzelnen Teilwellen, welche beispielsweise durch Flanschverbindungen verbunden sind, zusammengesetzt. Ferner sind auf einer durchgehenden Welle, beispielsweise zwischen den Sub-Rotoren, keine weiteren Lager angeordnet. Eine derartige durchgängige Welle führt zu einer zusätzlichen axialen Verkürzung der elektrischen rotierenden Maschine.

In einer bevorzugten Ausgestaltung weist zumindest einer der Sub-Rotoren in Axialrichtung hintereinander angeordnete Teilblechpakete auf. Die Teilblechpakete werden als Standardkomponenten hergestellt, welche nahezu beliebig kombinierbar sind. Durch die Verwendung von hintereinander angeordneten Teilblechpaketen ist der Rotor somit einfach und kostengünstig skalierbar.

Bei einer weiteren vorteilhaften Ausführungsform weisen die Teilblechpakete des zumindest einen Sub-Rotors jeweils mindestens einen Permanentmagneten auf. Durch eine derartige Rotorarchitektur können die Permanentmagnete, gemäß mechanischer und elektrischer Anforderungen, mit geringem Aufwand auf dem Rotor angeordnet werden. Insbesondere eine Skalierung des Rotors ist einfach und kostengünstig realisierbar.

Besonders vorteilhaft sind die Sub-Statoren unabhängig voneinander betreibbar ausgeführt. Beispielsweise in einem Teillastbetrieb wird zumindest einer der Sub-Statoren ausgeschaltet, was zu einer Reduzierung der Leistungsaufnahme führt.

Bei einer weiteren vorteilhaften Ausgestaltung weisen zumindest zwei Sub-Statoren eine unterschiedliche axiale Länge auf. Durch eine Variation der axialen Länge zumindest eines Sub-Stators ist eine Vielzahl von Leistungsvarianten realisierbar.

In einer bevorzugten Ausgestaltung ist der Schaft über mindestens einen Verbindungsabschnitt mit dem Gehäuse der elektrischen rotierenden Maschine verbunden, wobei die Stromzuführungen der Sub-Statoren durch den mindestens einen Verbindungsabschnitt verlaufen. Beispielsweise ist der Schaft über zwei axial hintereinander angeordnete Verbindungsabschnitte mit dem Gehäuse der elektrischen rotierenden Maschine verbunden, wobei zwischen dem Schaft und dem Gehäuse ein Spülkanal angeordnet ist und die Stromzuführungen der Sub-Statoren durch die Verbindungsabschnitte verlaufen. Durch die geringe Kontaktfläche des mindestens einen Verbindungsabschnitts mit dem Gehäuse wird eine effiziente Kühlung der elektrischen rotierenden Maschine mit dem umgebenden Wasser erzielt.

Im Folgenden wird die Erfindung anhand der in den Figuren dargestellten Ausführungsbeispiele näher beschrieben und erläutert.

Es zeigen:
- FIG 1: einen Längsschnitt einer ersten Ausführungsform eines Gondelantriebs,
- FIG 2: einen Längsschnitt einer zweiten Ausführungsform eines Gondelantriebs,
- FIG 3: einen Längsschnitt einer dritten Ausführungsform eines Gondelantriebs,
- FIG 4: einen Längsschnitt einer vierten Ausführungsform eines Gondelantriebs und
- FIG 5: ein Wasserfahrzeug mit einem Gondelantrieb.

Gleiche Bezugszeichen haben in den verschiedenen Figuren die gleiche Bedeutung.

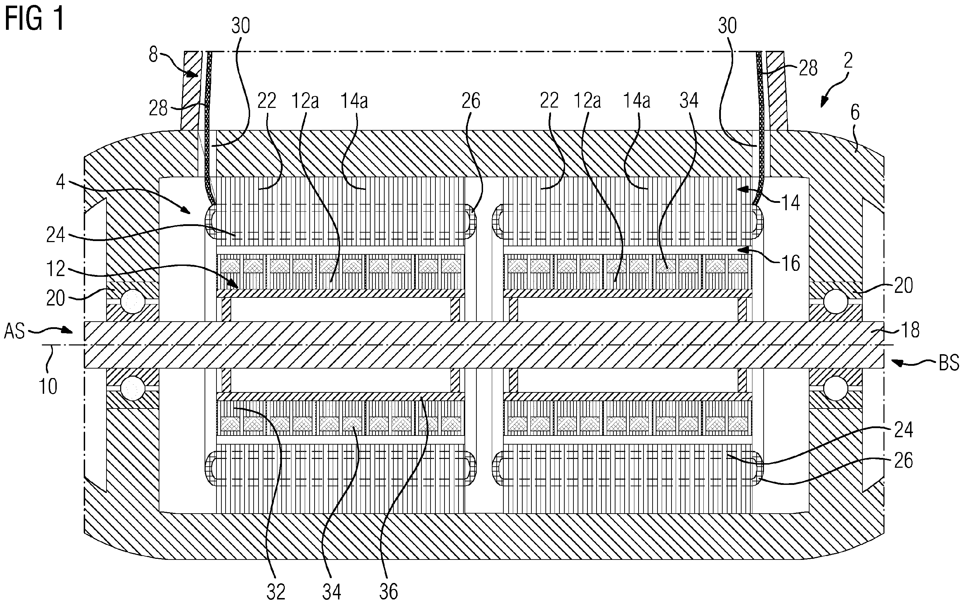

FIG 1 zeigt einen Längsschnitt einer ersten Ausführungsform eines Gondelantriebs 2 mit einer elektrischen rotierenden Maschine 4, welche exemplarisch als permanenterregte Synchronmaschine ausgeführt ist. Die elektrische rotierende Maschine 4 weist ein Gehäuse 6 auf, welches an einem Schaft 8 befestigt ist. Das Gehäuse 6 wird beispielsweise aus Stahl oder Bronze hergestellt. Über den Schaft 8 ist der Gondelantrieb 2 drehbar mit einem in FIG 1 aus Gründen der Übersichtlichkeit nicht dargestellten Schiffsrumpf verbunden. Die elektrische rotierende Maschine 4 umfasst ferner einen um eine Rotationsachse 10 rotierbaren Rotor 12 und einen den Rotor 12 umgebenden Stator 14. Zwischen dem Rotor 12 und dem Stator 14 befindet sich ein Spalt 16, der bevorzugt als Luftspalt ausgeführt ist. Die Rotationsachse 10 definiert eine Axialrichtung, eine Radialrichtung und eine Umfangsrichtung. Der Rotor 12 ist drehfest auf einer Welle 18 befestigt, welche an einer Antriebsseite AS und an einer Nicht-Antriebsseite BS jeweils ein Lager 20 aufweist.

Der Stator 14 der elektrischen rotierenden Maschine 4 umfasst zwei Sub-Statoren 14a, welche jeweils mit dem Gehäuse 6 verbunden sind und je ein abgetrenntes Statorblechpaket 22 aufweisen, durch das jeweils eine separate Statorwicklung 24 verläuft. Die Leistung eines Sub-Stators 14a liegt beispielsweise im Bereich von 1 Megawatt bis 12 Megawatt. Die axiale Länge der beiden Sub-Statoren 14a sowie deren Durchmesser sind im Wesentlichen gleich, sodass deren Leistung ebenfalls im Wesentlichen identisch ist. Durch einen modularen Aufbau eines Gondelantriebs 2 mit einem oder zwei gleich langen und somit gleich leistungsfähigen Sub-Statoren 14a sind insbesondere Gondelantriebe 2 mit zwei verschiedenen Leistungen realisierbar. Alternativ weisen die Sub-Statoren 14a eine unterschiedliche axiale Länge auf. Daraus ergeben sich bei einem modularen Aufbau mehrere Leistungsvarianten.

Die Statorwicklungen 24 der Sub-Statoren 14a sind aus Zahnspulen aufgebaut, wodurch die Statorwicklungen 24, insbesondere im Vergleich zu einer konventionellen Zweischichtwicklung, axial kürzere Wickelköpfe 26 aufweisen. Durch die geringere Wickelkopfausladung wird eine optimierte axiale Länge des Stators 14 erreicht. Ferner wird durch die kürzeren Wickelköpfe 26 der Zahnspulen ein geringer Abstand zwischen den Lagern 20 erzielt, was sich positiv auf die Rotordynamik auswirkt. Ein möglicherweise schlechterer Wirkungsgrad der Zahnspulen wird durch die kürzeren Wickelköpfe 26 kompensiert. Die Statorwicklungen 24 der Sub-Statoren 14a werden über jeweils eine Stromzuführung 28 gespeist, welche jeweils durch einen, insbesondere in Radialrichtung verlaufenden, Kanal 30 im Gehäuse 6 und durch den Schaft 8 in den Schiffsrumpf geführt werden. Insbesondere durch die eigenen Stromzuführungen 28 sind die Sub-Statoren 14a, beispielsweise durch unterschiedliche Umrichter, unabhängig voneinander betreibbar.

Der Rotor 12 der elektrischen rotierenden Maschine 4 umfasst darüber hinaus zwei Sub-Rotoren 12a, wobei jedem Sub-Stator 14a ein Sub-Rotor 12a zugeordnet ist. Die Sub-Rotoren 12a sind jeweils drehfest mit der Welle 18 verbunden. Die drehfeste Verbindung mit der Welle 18 wird beispielsweise durch eine Schrumpfverbindung oder Klemmverbindung des jeweiligen Sub-Rotors 12a mit der Welle 18 hergestellt. Die Welle 18 ist als eine durchgehende Welle 18 ausgeführt, das heißt, dass die Welle 18 nicht aus einzelnen Teilwellen, welche beispielsweise durch Flanschverbindungen verbunden sind, zusammengesetzt ist und zwischen den Sub-Rotoren 12a keine weiteren Lager 20 angeordnet sind. Eine derartige durchgängige Welle 18 führt zu einer zusätzlichen axialen Verkürzung der elektrischen rotierenden Maschine 4. Die Sub-Rotoren 12a weisen jeweils mehrere in Axialrichtung hintereinander angeordnete Teilblechpakete 32 auf. Die Teilblechpakete 32 weisen jeweils zumindest einen Permanentmagneten 34 auf. Die axiale Länge der Sub-Rotoren 12a ist insbesondere durch die Anzahl der verwendeten Teilblechpakete 32, welche bevorzugt eine oder mehrere Standardlängen aufweisen, leicht und kostengünstig skalierbar. Die axiale Länge der hintereinander angeordneten Teilblechpakete 32 der Sub-Rotoren 12a entspricht im Wesentlichen der axialen Länge des Statorblechpakets 22 des jeweiligen Sub-Stators 14a. In Umfangsrichtung werden, je nach Polpaarzahl der elektrischen rotierenden Maschine 4, unterschiedlich viele Teilblechpakete 32 mit Permanentmagneten 34, beispielsweise auf einem Polrad 36, angeordnet.

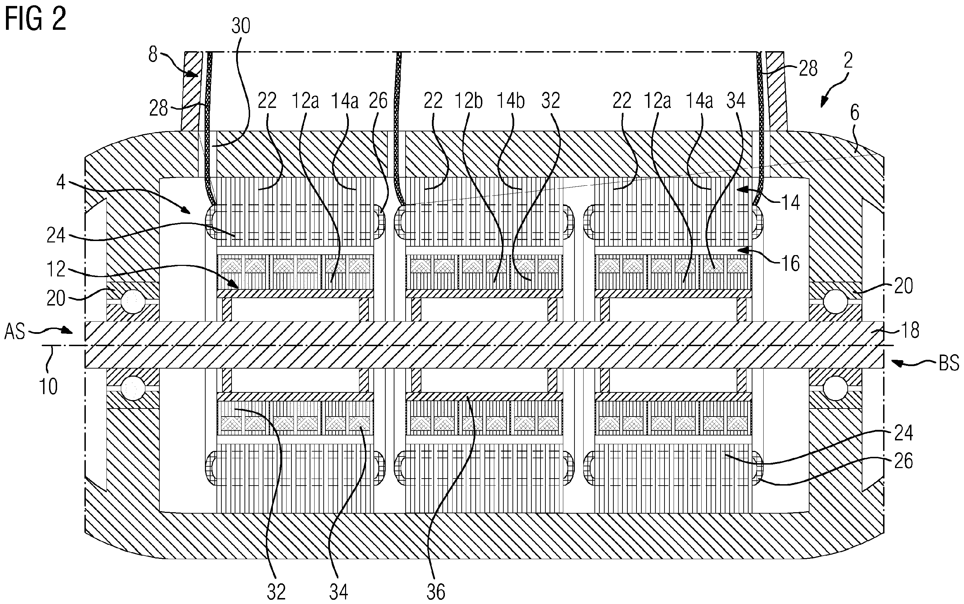

FIG 2 zeigt einen Längsschnitt einer zweiten Ausführungsform eines Gondelantriebs 2 mit einer elektrischen rotierenden Maschine 4, welche einen Stator 14 mit zwei äußeren Sub-Statoren 14a und exemplarisch einem inneren Sub-Stator 14b umfasst. Den beiden äußeren Sub-Statoren 14a ist jeweils ein äußerer Sub-Rotor 12a und dem inneren Sub-Stator 14b ist ein innerer Sub-Rotor 12b zugeordnet. Durch einen modularen Aufbau eines Gondelantriebs 2 mit einem, zwei oder drei gleich langen und somit gleich leistungsfähigen Sub-Statoren 14a, 14b sind insbesondere Gondelantriebe 2 mit drei verschiedenen Leistungen realisierbar.

Die Sub-Statoren 14a werden über jeweils eine Stromzuführung 28 gespeist, welche jeweils durch einen, insbesondere in Radialrichtung verlaufenden, Kanal 30 im Gehäuse 6 und durch den Schaft 8 in den Schiffsrumpf geführt werden. Die weitere Ausführung des Gondelantriebs 2 in FIG 2 entspricht der Ausführung in FIG 1.

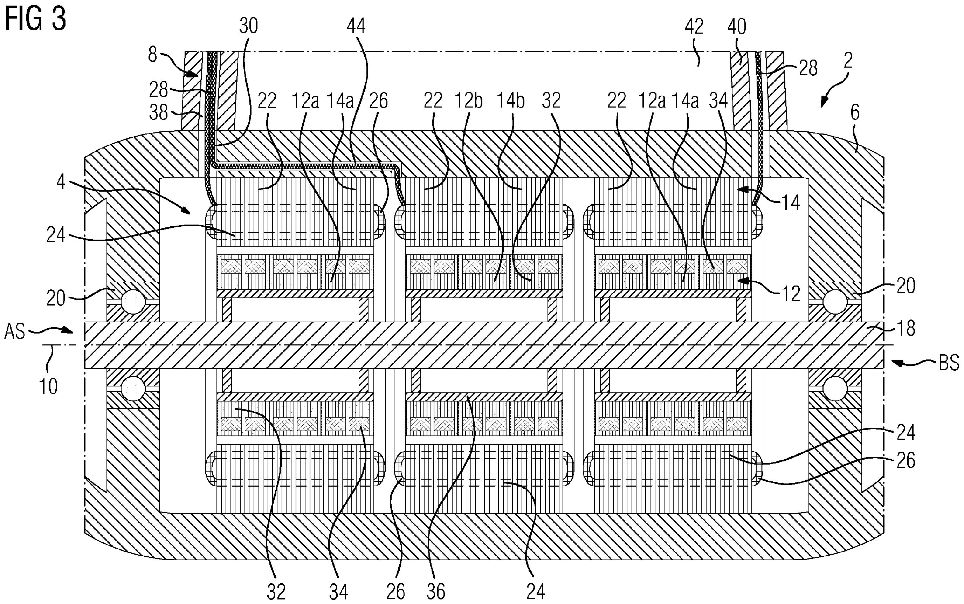

FIG 3 zeigt einen Längsschnitt einer dritten Ausführungsform eines Gondelantriebs mit einer elektrischen rotierenden Maschine 4, welche, wie in FIG 2, einen Stator 14 mit zwei äußeren Sub-Statoren 14a und exemplarisch einem inneren Sub-Stator 14b umfasst. Der Gondelantrieb 2 weist einen Schaft 8 auf, welcher das Gehäuse 6 der elektrischen rotierenden Maschine 4 über einen antriebsseitigen Verbindungsabschnitt 38 und einen abtriebsseitigen Verbindungsabschnitt 40 mit dem in FIG 3 aus Gründen der Übersichtlichkeit nicht dargestellten Schiffsrumpf verbindet. Zwischen den beiden Verbindungsabschnitten 38, 40 befindet sich zumindest ein Spülkanal 42, welcher mit den Gondelantrieb 2 umgebendem Wasser kontaktierbar ist, um die elektrische rotierende Maschine 4 auch im Bereich des Schafts 8 von außen zu kühlen. Die Stromzuführung 28 der Statorwicklung 24 des äußeren Sub-Stators 14a auf der Antriebsseite AS verläuft durch einen Kanal 30 im Gehäuse und dem antriebsseitigen Verbindungsabschnitt 38, während die Stromzuführung 28 der Statorwicklung 24 des äußeren Sub-Stators 14a auf der Nicht-Antriebsseite BS durch einen weiteren Kanal 30 im Gehäuse und den abtriebsseitigen Verbindungsabschnitt 40 verläuft. Die Stromzuführung 28 der Statorwicklung 24 des inneren Sub-Stators 14b verläuft durch einen axialen Kanal 44 im Gehäuse, welcher in den Kanal 30 und daraufhin in den antriebsseitigen Verbindungsabschnitt 38 mündet, sodass die Stromzuführung 28 des inneren Sub-Stators 14b mit der Stromzuführung 28 des antriebsseitig angeordneten äußeren Sub-Stators 14a teilweise in einem gemeinsamen Kanal 30 verlaufend angeordnet ist. Alternativ verläuft der axiale Kanal 44 in Richtung der Nicht-Antriebsseite BS, sodass die Stromzuführung 28 des inneren Sub-Stators 14b mit der Stromzuführung 28 des abtriebsseitig angeordneten äußeren Sub-Stators 14a teilweise in einem gemeinsamen Kanal 30 verlaufend angeordnet ist. Die Stromzuführungen 28 weiterer innerer Sub-Statoren 14b werden ebenfalls in axialen Kanälen 44 angeordnet, sodass die Stromzuführungen zumindest durch einen Verbindungsabschnitt 38, 40 des Gondelantriebs 2 verlaufen. Die weitere Ausführung des Gondelantriebs 2 in FIG 3 entspricht der Ausführung in FIG 2.

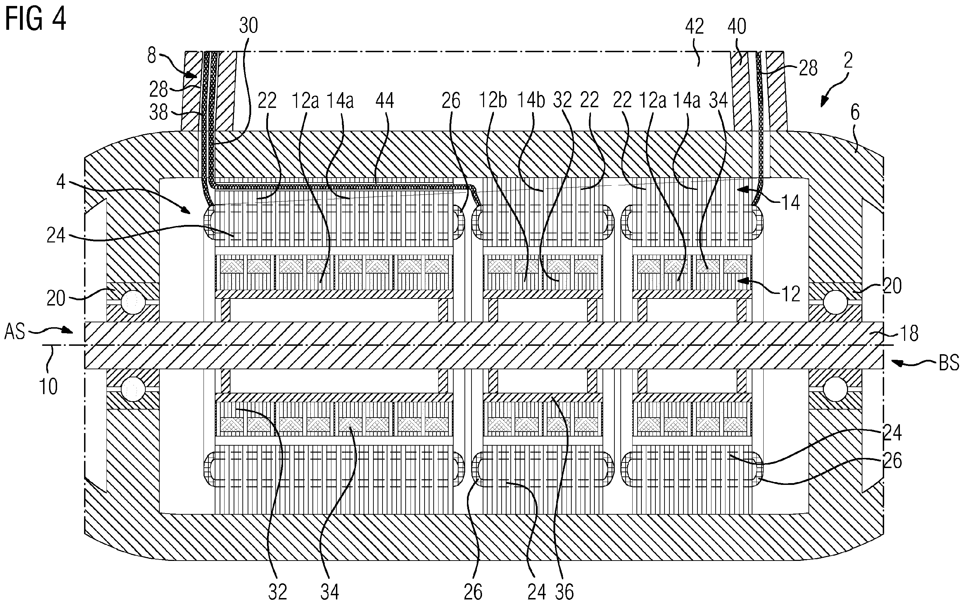

FIG 4 zeigt einen Längsschnitt einer vierten Ausführungsform eines Gondelantriebs 4, welcher mit einer elektrischen rotierenden Maschine 4, welche, wie in FIG 2 und FIG 3, einen Stator 14 mit zwei äußerem Sub-Statoren 14a und exemplarisch einem inneren Sub-Stator 14b umfasst. Die Sub-Statoren 14a, 14b weisen jedoch eine unterschiedliche axiale Länge auf. Durch einen modularen Aufbau eines Gondelantriebs 2 mit einem, zwei oder drei ungleich langen und somit verschieden leistungsfähigen Sub-Statoren 14a, 14b sind insbesondere Gondelantriebe 2 mit mehreren Leistungsvarianten realisierbar. Beispielsweise wird die Anzahl der realisierbaren Leistungsvarianten durch die axiale Länge der Teilblechpakete 32 der Sub-Rotoren 12a, 12b bestimmt.

Die Stromzuführung 28 der Statorwicklung 24 des inneren Sub-Stators 14b verläuft durch einen axialen Kanal 44 im Statorblechpaket 22 des antriebsseitig angeordneten äußeren Sub-Stators 14a. Nach dem axialen Kanal 44 durch das Statorblechpaket 22 ist die Stromzuführung 28 der Statorwicklung 24 des inneren Sub-Stators 14b mit der Stromzuführung 28 des antriebsseitig angeordneten äußeren Sub-Stators 14a in einem gemeinsamen Kanal 30 verlaufend angeordnet, welcher in den antriebsseitigen Verbindungsabschnitt 38 mündet. Alternativ verläuft die Stromzuführung 28 der Statorwicklung 24 des inneren Sub-Stators 14b durch einen axialen Kanal 44 im Statorblechpaket 22 des abtriebsseitig angeordneten äußeren Sub-Stators 14a, wobei dann die Stromzuführung 28 der Statorwicklung 24 des inneren Sub-Stators 14b nach dem axialen Kanal 44 mit der Stromzuführung 28 des abtriebsseitig angeordneten äußeren Sub-Stators 14a in einen gemeinsamen Kanal 30 verlaufend angeordnet ist, welcher in den abtriebsseitigen Verbindungsabschnitt 40 mündet. Die weitere Ausführung des Gondelantriebs 2 in FIG 4 entspricht der Ausführung in FIG 3.

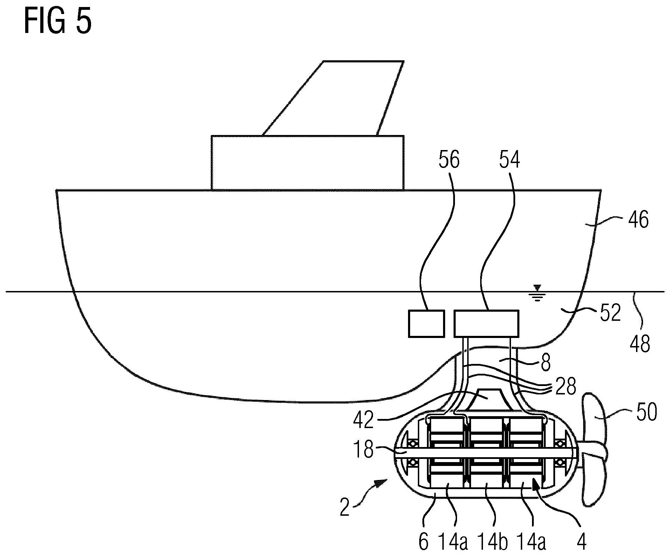

FIG 5 zeigt ein Wasserfahrzeug 46 mit einem Gondelantrieb 2. Das Wasserfahrzeug 46 ist als Schiff ausgeführt. Alternativ weist das Schiff zwei oder mehr Gondelantriebe 2 auf. Der Gondelantrieb 2 befindet sich unter einer Wasseroberfläche 48 und weist eine elektrische rotierende Maschine 4 mit einem Propeller 50 auf, wobei der Propeller 50 über eine Welle 18 mit der elektrischen rotierenden Maschine 4 verbunden ist. Das Gehäuse 6 der elektrischen rotierenden Maschine 4 ist über einen Schaft 8, der einen Spülkanal 42 aufweist, mit einem Schiffsrumpf 52 verbunden, wobei die Stromzuführungen 28 der Sub-Statoren 14a, 14b durch den Schaft 8 in den Schiffsrumpf 52 zu einer Stromversorgungsvorrichtung 54 verlaufen. Eine Steuervorrichtung 56, welche beispielhaft im Schiffsrumpf angeordnet ist, ist dafür geeignet, die Sub-Statoren 14a, 14b unabhängig voneinander zu betreiben, um, beispielsweise in einem Teillastbetrieb, zumindest einen der Sub-Statoren 14a, 14b auszuschalten.

Zusammenfassend betrifft die Erfindung eine elektrische rotierende Maschine 4, insbesondere Synchronmaschine, für einen Gondelantrieb 2, mit einem Stator 14 und einem Gehäuse 6. Um bei einem modularen Aufbau eine, im Vergleich zum Stand der Technik, geringere axiale Länge der elektrischen rotierenden Maschine 4 zu erzielen, wird vorgeschlagen, dass der Stator 14 mindestens zwei Sub-Statoren 14a, 14b umfasst, welche jeweils mit dem Gehäuse 6 verbunden sind und eine separate Statorwicklung 24 aufweisen, wobei zumindest eine Statorwicklung 24 eines Sub-Stators 14a, 14b eine Zahnspule aufweist.

## Patentansprüche

1. Elektrische rotierende Maschine (4), insbesondere Synchronmaschine, für einen Gondelantrieb (2) mit einem Stator (14) und einem Gehäuse (6),
wobei der Stator (14) mindestens zwei Sub-Statoren (14a, 14b) umfasst, welche jeweils mit dem Gehäuse (6) verbunden sind und eine separate Statorwicklung (24) aufweisen,
wobei zumindest eine Statorwicklung (24) eines Sub-Stators (14a, 14b) eine Zahnspule aufweist.

2. Elektrische rotierende Maschine (4) nach Anspruch 1, wobei der Stator (14) zwei äußere Sub-Statoren (14a) und mindestens einen inneren Sub-Stator (14b) umfasst.

3. Elektrische rotierende Maschine (4) nach Anspruch 2, wobei eine Stromzuführung (28) mindestens eines inneren Sub-Stators (14b) mit mindestens einer Stromzuführung (28) eines äußeren Sub-Stators (14a) zumindest teilweise in einen gemeinsamen Kanal (30) verlaufend angeordnet ist.

4. Elektrische rotierende Maschine (4) nach einem der Ansprüche 2 oder 3,
wobei eine Stromzuführung (28) mindestens eines inneren Sub-Stators (14b) zumindest teilweise in Axialrichtung durch das Gehäuse (6) und/oder durch ein Statorblechpaket (22) eines äußeren Substators (14a) verlaufend angeordnet ist.

5. Elektrische rotierende Maschine (4) nach einem der vorherigen Ansprüche,
aufweisend einen Rotor (12) mit Sub-Rotoren (12a, 12b), welche jeweils drehfest mit einer Welle (18) verbunden sind, wobei jedem Sub-Stator (14a, 14b) ein Sub-Rotor (12a, 12b) zugeordnet ist.

6. Elektrische rotierende Maschine (4) nach Anspruch 5, wobei die Welle (18) als eine durchgehende Welle (18) ausgeführt ist.

7. Elektrische rotierende Maschine (4) nach einem der Ansprüche 5 oder 6,
wobei zumindest einer der Sub-Rotoren (12a, 12b) in Axialrichtung hintereinander angeordnete Teilblechpakete (32) aufweist.

8. Elektrische rotierende Maschine (4) nach Anspruch 7,
wobei die Teilblechpakete (32) des zumindest einen Sub-Rotors (12a, 12b) jeweils mindestens einen Permanentmagneten (34) aufweisen.

9. Elektrische rotierende Maschine (4) nach einem der vorherigen Ansprüche,
wobei die Sub-Statoren (14a, 14b) unabhängig voneinander betreibbar ausgeführt sind.

10. Elektrische rotierende Maschine (4) nach einem der vorherigen Ansprüche,
wobei zumindest zwei Sub-Statoren (14a, 14b) eine unterschiedliche axiale Länge aufweisen.

11. Gondelantrieb (2) mit mindestens einer elektrischen rotierenden Maschine (4) nach einem der Ansprüche 1 bis 10.

12. Gondelantrieb (2) nach Anspruch 11,
wobei der Schaft (8) über mindestens einen Verbindungsabschnitt (38, 40) mit dem Gehäuse (6) der elektrischen rotierenden Maschine (4) verbunden ist,
wobei die Stromzuführungen (28) der Sub-Statoren (14a, 14b) durch den mindestens einen Verbindungsabschnitt (38, 40) verlaufen.

13. Wasserfahrzeug (46), insbesondere Schiff, mit mindestens einem Gondelantrieb (2) nach einem der Ansprüche 11 oder 12.

14. Steuervorrichtung (56) für mindestens eine elektrische rotierenden Maschine (4) nach einem der Ansprüche 1 bis 10, die dafür eingerichtet ist, in einem Teillastbetrieb zumindest einen der Sub-Statoren (14a, 14b) auszuschalten.
